# EUROPÄISCHE PATENTANMELDUNG

(11) **EP 2 821 108 A1**
(43) Veröffentlichungstag der Anmeldung: **07.01.2015**
(21) Anmeldenummer: 13174854.3
(22) Anmeldetag: 03.07.2013
(51) Int. Cl.: A62C 2/06, A62C 3/16, H02G 3/08

(54) **Intumeszierende Brandschutzeinlage und Baugruppe mit intumeszierender Brandschutzeinlage**

(71) Anmelder: HILTI Aktiengesellschaft, 9494 Schaan (LI)
(72) Erfinder: Münzenberger, Herbert, 65191 Wiesbaden (DE)
(74) Vertreter: Hilti Aktiengesellschaft Corporate Intellectual Property

(57) **Zusammenfassung**

Eine intumeszierende Brandschutzeinlage (10) zum formschlüssigen Einlegen in eine Elektroinstallationsdose (12) in Wänden oder Decken, die einen Boden (14) und eine an den Boden (14) anschließende Umfangswand (16) aufweist, hat einen flächigen Grundkörper (22), der die Form des Bodens (14) der Elektroinstallationsdose (12) aufweist, sowie zumindest ein Seitenelement (26), das schwenkbar an einem Rand (24) des Grundkörpers (22) gelagert ist und die Form eines Abschnitts der Umfangswand (16) aufweist.

## Beschreibung

Die Erfindung betrifft eine intumeszierende Brandschutzeinlage für Elektroinstallationsdosen in Wänden oder Decken.

Aus Brandschutzgründen, aber auch, um den Durchtritt von Schall oder Zugluft zu verhindern, ist es erwünscht, Elektroinstallationsdosen in Wänden oder Decken abzudichten. Bisher bekannte Dichtungen können jeweils nur eine oder zwei dieser Anforderungen erfüllen. Dichtungen gegen Zugluft bieten zwar auch einen gewissen Schallschutz, aber aufgrund des Materials nur einen geringen Schutz gegen Feuer. Brandschutzelemente lassen sich dagegen nur schwer in Elektroinstallationsdosen integrieren, da auch die Anschlüsse an Kabelkanäle, die in den Wänden verlegt sind, abgedichtet werden müssen. Zudem ist der Bauraum innerhalb solcher Elektroinstallationsdosen begrenzt. Des Weiteren besteht ein Bedarf, bei bestehenden Gebäuden den Brandschutz sowie den Komfort zu verbessern, indem vorhandene Elektroinstallationsdosen nachträglich mit einem Brand-, Schall- und Zugluftschutz versehen werden.

Aufgabe der Erfindung ist es daher, eine intumeszierende Brandschutzeinlage bereitzustellen, die eine Abdichtung der Elektroinstallationsdosen sowohl im Brandfall als auch im normalen Gebrauch gegen Schall und Zugluft ermöglicht und des Weiteren auch bei bestehenden Elektroinstallationsdosen in Wänden und Decken nachrüstbar ist.

Zur Lösung der Aufgabe ist eine intumeszierende Brandschutzeinlage zum formschlüssigen Einlegen in eine Elektroinstallationsdose in Wänden oder Decken vorgesehen, die einen Boden und eine an den Boden anschließende Umfangswand aufweist, mit einem flächigen Grundkörper, der die Form des Bodens der Elektroinstallationsdose aufweist, sowie zumindest einem Seitenelement, das schwenkbar an einem Rand des Grundkörpers gelagert ist und die Form eines Abschnitts der Umfangswand aufweist. Der Erfindung liegt die Überlegung zugrunde, eine Einlage für Elektroinstallationsdosen bereitzustellen, die alle Anforderungen sowohl an den Brandschutz als auch an den Schall- und Zugluftschutz erfüllt. Diese Einlage wird in die Elektroinstallationsdose eingelegt, die bereits an der Wand oder der Decke montiert ist, beispielsweise in diese eingegossen ist. Anschließend werden die Elektroinstallationen in der Elektroinstallationsdose montiert. Kabel, die an den Elektroinstallationen angeschlossen werden sollen, können bereits vor dem Einlegen dieser Brandschutzeinlage verlegt werden, sodass deren Verlegung nicht durch die Brandschutzeinlage erschwert wird.

Die Brandschutzeinlage ist in vormontiertem Zustand eben ausgebildet, sodass ein einfacher Transport und eine platzsparende Lagerung möglich sind. Die Brandschutzeinlage weist einen Grundkörper auf, der in montiertem Zustand flächig auf dem Boden der Elektroinstallationsdose aufliegt und diesen vollständig, zumindest aber im Bereich von Öffnungen für Kabel oder Leitungen, bedeckt. Ebenso bedeckt das Seitenelement, das schwenkbar am Grundkörper gelagert ist, die Umfangswand teilweise, zumindest aber im Bereich von Öffnungen. Für Leitungen können Aussparungen im Grundkörper oder im Seitenelement vorgesehen sein, wobei diese so angepasst sind, dass sich die Brandschutzeinlage in Umfangsrichtung vollständig an die Leitung oder das Kabel anlegt, so dass die Öffnungen gegen Schall und Zugluft abgedichtet sind, wodurch ein guter Schutz gegen den Durchtritt von Schall oder Zugluft hergestellt ist. Im Brandfall schäumt das Material der Brandschutzeinlage bei ansteigender Temperatur auf und dichtet so die Elektroinstallationsdose bzw. die Öffnungen und Durchbrüche für Kabel oder Leitungen der Elektroinstallationsdose zusätzlich ab.

Da die Brandschutzeinlage in die Elektroinstallationsdosen eingelegt wird, ist auch eine Nachrüstung bestehender Elektroinstallationsdosen möglich. Zudem sind an den Elektroinstallationsdosen selbst keine besonderen Vorkehrungen zur Montage der Brandschutzeinlage erforderlich, sodass bereits eingebaute Elektroinstallationsdosen weiter verwendet werden können. Insbesondere ist auch eine Anpassung der Brandschutzeinlage an die Form der Elektroinstallationsdose möglich.

Das zumindest eine Seitenelement ist vorzugsweise einstückig mit dem Grundkörper verbunden, sodass zwischen Grundkörper und Seitenelement kein Spalt entstehen kann. Zudem sind dadurch der Transport und die Montage erleichtert, da das Seitenelement nicht verloren gehen kann.

Das Seitenelement kann auf verschiedene Weisen schwenkbar am Grundkörper gelagert sein. Sind diese einstückig miteinander verbunden, ist beispielsweise zwischen dem Grundkörper und dem Seitenelement zumindest eine Faltkante vorgesehen, um die das Seitenelement geschwenkt werden kann. Insbesondere kann diese Faltkante durch eine Nut gebildet sein.

An den Rändern des Grundkörpers und/oder an den Rändern des zumindest einen Seitenelements kann zusätzlich ein Wulst oder eine Verdickung vorgesehen sein. Dieser Wulst oder diese Verdickung wird beim Einsetzen der Elektroinstallation zusätzlich verpresst, sodass eine verbesserte Abdichtung gegen Schall oder Zugluft erzielt werden kann.

Bei der Montage können am Grundkörper oder am Seitenteil Aussparungen angebracht werden, durch die Kabel oder Leitungen geführt werden können. Es ist aber auch denkbar, dass am Grundkörper und/oder am zumindest einen Seitenelement zumindest ein Durchbruch für ein Kabel oder eine Leitung vorgesehen ist. Um sicherzustellen, dass dieser Durchbruch bei Nichtgebrauch keine Durchtrittsöffnung für Schall oder Zugluft bildet, ist dieser Durchbruch vorzugsweise durch eine Sollbruchstelle gebildet, die erst bei der Montage der Brandschutzeinlage oder eines Kabels geöffnet wird. Diese Sollbruchstelle kann vorzugsweise ohne Werkzeug oder mit einfachen Mitteln geöffnet werden, so dass eine leichte Verlegung von Kabeln möglich ist. Wird die Brandschutzeinlage für normierte Elektroinstallationsdosen verwendet, können mehrere solcher Durchbrüche mit einer Sollbruchstelle an den häufig verwendeten Positionen für einen Kabeldurchbruch vorgesehen sein.

Abhängig von der Form der Elektroinstallationsdose können auch mehrere Seitenelemente vorgesehen sein, die insbesondere am Rand des Grundkörpers verteilt sind und gemeinsam die Form der Umfangswand aufweisen. Durch eine solche Brandschutzeinlage kann die Elektroinstallationsdose innenseitig vollständig ausgekleidet werden, wodurch ein besonders guter Brandschutz sowie eine sehr gute Abdichtung gegen Schall und Zugluft erzielt werden kann. Es ist aber auch möglich, mehrere Seitenelemente vorzusehen, die die Umfangswand lediglich im Bereich von Öffnungen oder Durchbrüchen für Kabel oder Leitungen abdecken.

Um die Brandschutzeinlage zusätzlich zu fixieren, können zwei oder mehrere Seitenelemente, bevorzugt zwei sich gegenüberliegende Seitenwände, so ausgestaltet sein, dass sie in montiertem Zustand, d.h. im eingesetzten Zustand, über die Seitenwände der Elektromontagedose hinausragen. Der über die Elektromontagedose hinausragende Teil des Seitenelements der Brandschutzeinlage wird dann umgebogen und mit der Elektroinstallation an dem Bauelement durch Befestigungsmittel, wie etwa Schrauben, fixiert. Hierdurch kann verhindert werden, dass im Brandfall, wenn die Elektromontagedose erweicht oder zu schmelzen beginnt und keinen Halt mehr an dem Bauelement findet, so dass sie herunterfällt, die Brandschutzeinlage mitgerissen wird. Diese würde dann ihre Wirkung verlieren. Durch die zusätzliche Fixierung an dem Bauteil, verbleibt die Brandschutzeinlage in der Bauteilöffnung und kann diese im Brandfall abdichten. Der über die Seitenwände der Elektromontagedose hinausragende Teil kann einstückig mit dem Seitenelementen ausgebildet sein, oder als weiteres Element mit dem Seitenelement verbunden sein, das zum leichteren Umbiegen mit einer Faltkante versehen sein kann. Um diese Faltkante kann dann das Zusatzelement geschwenkt werden.

Die Brandschutzeinlage umfasst bevorzugt ein schäumbares Bindemittel, das ein intumeszierendes Stoffgemisch enthält. Das Bindemittel dient dabei als verbundbildender Träger für das intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Polyhydroxyverbindung und/oder ein thermoplastisches oder duroplastisches polymeres Harzbindemittel und als Gasbildner ein Chlorparaffin, Melamin, eine Melaminverbindung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt, enthalten. Dadurch können temperaturführende Teile gekühlt werden. Bevorzugt ist ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen BrandschutzEinlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0116 846 B1, EP 0 158 165 B1, EP 0 274 068 A2, EP 1 347 549 A1, EP 1 641 895 B1 und DE 196 53 503 A1.

Die Herstellung der Brandschutzeinlage ist beispielsweise durch Formschäumen, wie Reaktionsschäumen (RIM), entsprechend der DE 3917518, z.B. mit Fomox®-Brandschutzschaum oder dem dämmschichtbildenden Baustoff HILTI CP 65GN, möglich. Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Um die Stabilität der aufgeschäumten Brandschutzeinlage zu verbessern, können aber auch Glasfasern in die Brandschutzeinlage eingearbeitet sein, durch die eine wesentlich höhere Stabilität des aufgeschäumten Materials erzielt werden kann. Die Brandschutzeinlage kann beispielsweise einen Kern aus Glasfasern, insbesondere aus einem Glasfasergewebe aufweisen. Dies verbessert zudem die Stabilität bei der Verarbeitung der Brandschutzeinlage, sodass ein einfacheres Verlegen der Brandschutzeinlage, insbesondere ein einfacheres Falten oder Schwenken der Seitenelemente, möglich ist.

Zur Lösung der Aufgabe ist des Weiteren eine Baugruppe mit einer solchen Brandschutzeinlage sowie mit einer Elektroinstallationsdose vorgesehen. Die Elektroinstallationsdose weist einen Boden sowie eine an den Boden anschließende Umfangswand auf, wobei der Grundkörper des Brandschutzelements den Boden vollständig bedeckt und die Seitenelemente die Umfangswand der Elektroinstallationsdose vollständig bedecken.

Weitere Vorteile und Merkmale finden sich in der nachfolgenden Beschreibung in Verbindung mit den beigefügten Zeichnungen. In diesen zeigen:
- Figur 1: eine erfindungsgemäße Brandschutzeinlage, und
- Figur 2: eine erfindungsgemäße Baugruppe mit einer Elektroinstallationsdose und der Brandschutzeinlage aus Figur 1.

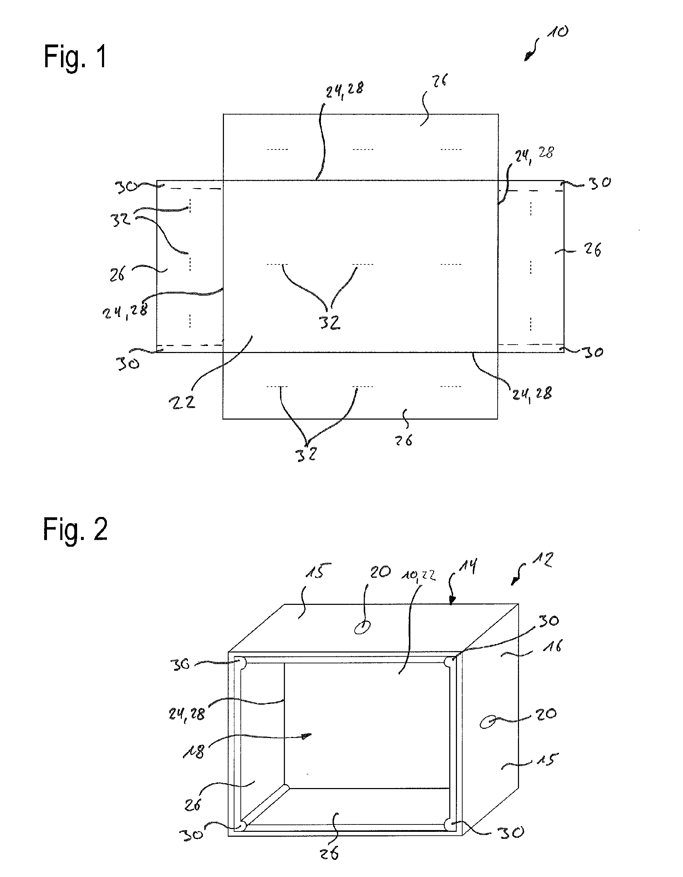

In Figur 1 ist eine intumeszierende Brandschutzeinlage 10 zum Einlegen in eine in Figur 2 gezeigte Elektroinstallationsdose 12 gezeigt. Solche Elektroinstallationsdosen 12 werden in Wänden oder Decken montiert, um Elektroinstallationen, beispielsweise Lichtschalter oder Steckdosen zu montieren. Die Elektroinstallationsdosen 12 werden entweder in Aussparungen in den Wänden montiert oder beispielsweise bei Betonwänden bei der Herstellung in diese eingegossen.

Die Elektroinstallationsdose 12 weist einen Boden 14 sowie eine aus mehreren Seitenwänden 15 bestehende Umfangswand 16 auf, die einen Aufnahmeraum 18 für eine Elektroinstallation, beispielsweise eine Steckdose oder einen Lichtschalter, definieren. An der Umfangswand 16 sind mehrere Öffnungen 20 vorgesehen. An diese Öffnungen 20 können Kabelkanäle angeschlossen werden, um Leitungen in den Aufnahmeraum 18 zu führen. Weitere Öffnungen können am Boden 14 der Elektroinstallationsdose 12 vorgesehen sein.

Je nach Größe der Öffnungen 20 bzw. der an den Öffnungen 20 angeschlossenen Kabelkanäle kann es zum Durchtritt von Schall oder Zugluft zwischen benachbarten Räumen kommen. Aus diesem Grund ist eine Abdichtung der Öffnungen 20 gegen Schall oder Zugluft erwünscht. Zudem soll im Brandfall der Durchtritt von Feuer oder Rauch durch die Öffnungen 20 und die daran angeschlossenen Leitungen oder Kabelkanäle in andere Räume verhindert werden.

Um die Elektroinstallationsdose 12 entsprechend abdichten zu können, ist die in Figur 1 gezeigte intumeszierende Brandschutzeinlage 10 vorgesehen. Die Brandschutzeinlage 10 weist einen rechteckigen Grundkörper 22 auf, der in der hier gezeigten Ausführungsform im Wesentlichen die Form des Bodens 14 der Elektroinstallationsdose 12 aufweist. Des Weiteren sind an den Rändern 24 des Grundkörpers 22 jeweils Seitenelemente 26 vorgesehen, die, wie nachfolgend erläutert wird, jeweils die Form einer Seitenwand 15 der Umfangswand 16 der Elektroinstallationsdose 12 aufweisen.

Die Brandschutzeinlage 10 hat in der hier gezeigten Ausführungsform einen Kern aus einem Glasfasergewebe, der der Brandschutzeinlage 10 eine ausreichende Stabilität und Flexibilität verleiht. Das Glasfasergewebe ist vollständig in der Brandschutzeinlage 10 integriert.

Wie in Figur 1 zu sehen ist, sind die Seitenelemente 26 einstückig mit dem Grundkörper 22 verbunden, wobei zwischen den Seitenelementen 26 und dem Grundkörper 22 jeweils eine Faltkante 28 vorgesehen ist, die durch eine Nut gebildet ist. Dadurch sind die Seitenelemente 26 schwenkbar am Grundkörper 22 gelagert.

An den freien Rändern der Seitenelemente 26 sind des Weiteren Wülste 30 vorgesehen, die durch eine Verdickung des intumeszierenden Materials gebildet sind (siehe auch Figur 2).

Des Weiteren sind an den Seitenelementen sowie am Grundkörper 22 Sollbruchstellen 32 vorgesehen. An diesen ist das intumeszierende Material dünner ausgebildet ist und/oder das Glasfasergewebe durchschnitten.

Zur Montage wird die Brandschutzeinlage 10 so in die Elektroinstallationsdose 12 eingelegt, dass der Grundkörper 22 flächig am Boden 14 der Elektroinstallationsdose 12 aufliegt. Dies kann vor der Montage der Elektroinstallationsdose 12 erfolgen. Es ist aber auch möglich, dass die Elektroinstallationsdose 12 bereits in der Wand oder der Decke montiert ist, insbesondere in diese einbetoniert ist. Das Einlegen der Brandschutzeinlage 10 ist auch bei älteren, bereits installierten Elektroinstallationsdosen 12 möglich.

Des Weiteren liegen in montiertem Zustand die Seitenelemente 26 an der Umfangswand 16 an und bedecken insbesondere die Öffnungen 20. Die Sollbruchstellen 32 sind so angeordnet, dass diese über den Öffnungen 20 liegen. Um Kabel oder Leitungen durchzuführen, können die Sollbruchstellen 32 geöffnet werden, sodass ein Durchbruch für das Kabel oder die Leitung gebildet ist. Die Durchbrüche sind als länglicher Schlitz ausgebildet, so dass sich die Brandschutzeinlage in Umfangsrichtung an das Kabel oder die Leitung anlegt und den Durchbruch abdichtet. Sind zusätzliche Öffnungen 20 in der Elektroinstallationsdose 12 vorgesehen, welchen keine Sollbruchstellen 32 zugeordnet sind, können auch zusätzliche Durchbrüche in die Brandschutzeinlage 10 eingebracht werden, beispielsweise indem die Brandschutzeinlage durchschnitten ist. In diesem Fall ist darauf zu achten, dass der Durchbruch nur so groß gewählt ist, dass zwischen der Brandschutzeinlage 10 und der Leitung oder dem Kabel kein Spalt gebildet ist, durch den Zugluft oder Schall durchdringen kann. Aufgrund des flexiblen Materials aus dem die Brandschutzeinlage besteht, kann sich dieses Abdichtend um die durchgeführten Leitungen legen. Dazu ist es bevorzugt, dass der Durchbruch kleiner ist als der Durchmesser der durchzuführenden Leitung oder des Kabels.

Wie in Figur 2 zu sehen ist, liegen die Wülste 30 an den freien Rändern der benachbarten Seitenelemente 26 an und werden beim Einsetzen der Elektroinstallationen zusätzlich gegen diese gedrückt, sodass eine zusätzliche Abdichtung gegen Schall und Zugluft zwischen den benachbarten Rändern erfolgt. Weitere Wülste können an den freien Rändern der Seitenelemente 26 oder an Durchbrüchen vorgesehen sein.

Im Brandfall schäumt das intumeszierende Material der Brandschutzeinlage 10 auf und dichtet so auch im Brandfall die gesamte Elektroinstallationsdose 12 zusätzlich ab.

Die Brandschutzeinlage 10 kann beliebig an eine Elektroinstallationsdose 12 angepasst werden. Vorzugsweise weist der Grundkörper 22 jeweils im Wesentlichen die Form eines Bodens 14 der Elektroinstallationsdose 12 auf und die Seitenelemente 26 bilden gemeinsam die Umfangswand 16 der Elektroinstallationsdose 12.

Es ist aber auch denkbar, dass der Grundkörper 22 und die Seitenelemente 26 den Boden 14 bzw. die Umfangswand 16 nur teilweise, insbesondere im Bereich der Öffnungen 20 bedecken, sodass diese gegen Schall und Zugluft abgedichtet sind und im Brandfall zusätzlich durch das aufschäumende intumeszierende Material abgedichtet werden.

Insbesondere ist es möglich, dass nur ein Seitenelement 26 vorgesehen ist.

Der Grundkörper 22 kann beispielsweise auch nachträglich an die Form des Bodens 14 angepasst werden. Ebenso ist es möglich, Faltkanten 28 nachträglich einzubringen, um eine ideale Anpassung an die Form der Elektroinstallationsdose 12 zu erzielen.

## Patentansprüche

1. Intumeszierende Brandschutzeinlage (10) zum formschlüssigen Einlegen in eine Elektroinstallationsdose (12) in Wänden oder Decken, die einen Boden (14) und eine an den Boden (14) anschließende Umfangswand (16) aufweist, mit einem flächigen Grundkörper (22), der die Form des Bodens (14) der Elektroinstallationsdose (12) aufweist, sowie zumindest einem Seitenelement (26), das schwenkbar an einem Rand (24) des Grundkörpers (22) gelagert ist und die Form eines Abschnitts der Umfangswand (16) aufweist.

2. Brandschutzeinlage nach Anspruch 1, **dadurch gekennzeichnet, dass** das zumindest eine Seitenelement (26) einstückig mit dem Grundkörper (22) verbunden ist.

3. Brandschutzeinlage nach Anspruch 2, **dadurch gekennzeichnet, dass** zwischen dem Grundkörper (22) und dem Seitenelement (26) zumindest eine Faltkante (28) vorgesehen sind, die insbesondere durch eine Nut gebildet ist.

4. Brandschutzeinlage nach einem der vorhergehenden Ansprüche, **dadurch gekennzeichnet, dass** an den Rändern (24) des Grundkörpers (22) und/oder an den Rändern des zumindest einen Seitenelements (26) zumindest ein Wulst (30) oder eine Verdickung vorgesehen ist.

5. Brandschutzeinlage nach einem der vorhergehenden Ansprüche, **dadurch gekennzeichnet, dass** am Grundkörper (22) und/oder am zumindest einen Seitenelement (26) zumindest ein Durchbruch für ein Kabel oder eine Leitung vorgesehen ist, wobei der Durchbruch durch eine Sollbruchstelle (32) gebildet ist.

6. Brandschutzeinlage nach einem der vorhergehenden Ansprüche, **dadurch gekennzeichnet, dass** mehrere Seitenelemente (26) vorgesehen sind, die insbesondere am Rand (24) des Grundkörpers (22) verteilt sind und gemeinsam die Form der Umfangswand (16) aufweisen.

7. Brandschutzeinlage nach einem der vorhergehenden Ansprüche, **dadurch gekennzeichnet, dass** das zumindest ein Seitenelement (26) so ausgestaltet ist, dass es im montierten Zustand über die Umfangswand hinausragt.

8. Brandschutzeinlage nach einem der vorhergehenden Ansprüche, **dadurch gekennzeichnet, dass** die Brandschutzeinlage (10) einen Kern aus Glasfasern, insbesondere aus einem Glasfasergewebe, aufweist.

9. Brandschutzeinlage nach einem der vorhergehenden Ansprüche, **dadurch gekennzeichnet, dass** die Brandschutzeinlage ein schäumbares Bindemittel, das ein intumeszierendes Stoffgemisch enthält, umfasst.

10. Baugruppe mit einer Brandschutzeinlage (10) nach einem der vorhergehenden Ansprüche und mit einer Elektroinstallationsdose (12), die einen Boden (14) und eine an den Boden (14) anschließende Umfangswand (16) aufweist, wobei der Grundkörper (22) den Boden (14) vollständig bedeckt und die Seitenelemente (26) die Umfangswand (16) vollständig bedecken.
